# EUROPEAN PATENT APPLICATION

(11) **EP 2 682 326 A1**
(43) Date of publication of application: **08.01.2014**
(21) Application number: 12174994.9
(22) Date of filing: 04.07.2012
(51) Int. Cl.: B62D 1/14

(54) **Passenger conveyance device, method for controlling the speed of a passenger conveyance device and control device**

(71) Applicant: SUNRISE MEDICAL LIMITED, Stourbridge, West Midlands DY8 4PS (GB)
(72) Inventor: Tasker, Peter James, Ditton Priors, Shropshire WV16 6SU (GB); Williamson, Stephen, Wednesbury, West Midlands WS10 0RX (GB)
(74) Representative: Holzwarth-Rochford, Andreas

(57) **Abstract**

The invention relates to passenger conveyance device, especially powered mobility scooter, comprising at least one drive device to power at least one drive wheel of the passenger conveyance device and at least one control device to control the speed of the drive device, wherein the control device comprises at least one handle being rotatable around a first axis, in an idle rotational position of the handle the drive device is idled and rotating the handle around the first axis out of the idle rotational position causes a powering of the drive device, wherein a movement of the handle in a direction mainly perpendicular to the first axis leads to a slowing down and/or a prohibition of an acceleration of the passenger conveyance device and/or a rotation of the handle around the first axis into at least one power position leads to a maximum powering of the drive device, wherein a rotation of the handle around the first axis into a direction from the idle position to the power position and beyond the power position leads to a slowing down and/or prohibition of an acceleration of the passenger conveyance device; a method for controlling the speed of a passenger conveyance device as well as a control device.

## Description

The present invention is directed to passenger conveyance device, especially powered mobility scooter, comprising at least one drive device to power at least one drive wheel of the passenger conveyance device and at least one control device to control the speed of the drive device, wherein the control device comprises at least one handle being rotatable around a first axis, in an idle rotational position of the handle the drive device is idled and rotating the handle around the first axis out of the idle rotational position causes a powering of the drive device, as well as a method of controlling the speed and/or the acceleration of a passenger conveyance device and a control device for controlling the speed and/or acceleration of a passenger conveyance device.

In the state of the art a plurality of passenger conveyance devices is known. There are for example wheelchairs and powered mobility scooters. Powered mobility scooters have what is usually referred to as a manual steering. In contrast to this powered wheelchairs use two motors and it is the rotational control of these motors that determines the direction in which the wheelchair travels.

Mobility scooters, however traditionally have a single motor and preferably a transaxle differential gearbox coupled to two drive wheels. Due to this powering the drive wheels all operate at the same speed and the directional control of the powered mobility scooter is achieved by the user steering the passenger conveyance device by rotating the turn axis of at least one wheel. To reach such a steering the passenger conveyance device usually comprises a steering column on which also a control device for controlling a speed and/or acceleration of the mobility scooter is located.

Often in mobility scooters a so called "wig-wag" is used as a control device, especially speed and/or acceleration control device. Such a wig-wag usually comprises a handle in form for example of a double ended lever arrangement. This lever arrangement is located often at the steering wheel/steering handle bars and the wig-wag often has a left hand and right hand lever in a set up to suite the user so that either pulling back the left hand or right hand lever causes the scooter to move forward and pulling back the other lever causes the scooter to move backwards. Thus by turning the handle around a first axis not only the speed and acceleration of the scooter is controlled but also a direction of travel. In an idle rotational position of the wig-wag/handle a drive device of the mobility scooter is idled and depending on a deflection of the handle around the first axis relative to this idle position the speed and/or acceleration of the mobility scooter is changed.

Usually the further the lever is pulled in one of the directions the faster the scooter moves. It is possible to limit a maximum speed by a setting button or knob. This allows for example a reduction of the maximum speed when driving indoors. However, usually when driving outdoors the user is selecting a maximum speed and is pulling back one of the levers of the wig-wag as much as possible to set the maximum speed position for example 15 kph. In other words the handle is deflected by a maximum angle around the first axis out of the idle rotational position. Due to the location of the wig-wag or control device in the area of a steering column, a steering device and/or a steering handle a user usually grips the steering device and the wig-wag handle or lever at the same time.

To control the speed of a mobility scooter it is also known to use a control device having mainly one (single) lever, which is rotatable around an axis and is pulled back or pushed forward to control the speed of the speed and acceleration of the scooter. A direction of traveling of the mobility scooter is controlled in some cases controlled by the direction of turning of the lever or by a separate movement selector switch, which allows for example to choose between a forward travelling direction and a rearward travelling direction. Such control device are also sometimes referred to as a "wig-wag".

It has however been found that a user, if confronted with an unexpected reason to need to stop quickly, for example the sudden occurring of an obstacle in the drive path, by a natural instinct the user grips harder. As the user is usually holding the steering device and the respective handle/lever of the control device, especially wig-wag, in such a situation he grips harder as if he would pull on a brake.

Often mobility scooters comprise beside the wig-wag lever/handle separate brake levers also positioned in the area of the steering device. Usually these are also operated by pulling/gripping the brake lever.

Therefore in a "panic" situation a usual first reaction of the user is not to let go the steering device and the control device, especially wig-wag, handle/lever but to grip and pull what is closest to the hands, both the left hand and the right hand lever or one of these levers of the wig-wag or the single lever of the control device. As the usual situation is that the user is already pulling/gripping one of the levers or the single lever/one side of the handle the user pulls this end of the handle/lever even harder and in some situations might also simultaneously pulls the other end of the handle/the other lever. This usually results in the mobility scooter either continuing to travel at the same speed or also increasing the speed. Instead of avoiding a collision with the obstacle the mobility scooter is thus driven into the obstacle.

Thus an unwanted collision with the obstacle might occur or the panic situation might cause the user to drive at higher speeds and simultaneously try to steer around the obstacle what may lead to a loss of stability and at worse a tipping over of the mobility scooter device.

Thus it is an object of the invention to further develop the known passenger conveyance devices to overcome the disadvantages known in the state of the art, especially to avoid an acceleration of the passenger conveyance device in a panic situation. Furthermore a method for controlling the speed and/or acceleration of a passenger conveyance device overcoming the disadvantages of the state of the art as well as a control device for controlling the speed and/or acceleration of a passenger conveyance device overcoming the disadvantages known in the state of art should be provided.

The object with regard to the passenger conveyance device is achieved in that a movement of the handle in a direction mainly perpendicular to the first axis leads to a slowing down and/or a prohibition of an acceleration of the passenger conveyance device and/or a rotation of the handle around the first axis into at least one power position leads to a maximum powering of the drive device, wherein a rotation of the handle around the first axis into a direction from the idle position to the power position and beyond the power position leads to a slowing down and/or prohibition of an acceleration of the passenger conveyance device.

With the invention it is furthermore proposed that the drive device comprises an electric motor and/or a combustion engine.

A passenger conveyance device according to the invention maybe further characterized in that by a rotation of the handle out of the idle rotational position into a first direction around the first axis a forward movement of the passenger conveyance device is achieved, whereas by a rotation of the handle out of the idle rotational position into a second direction, being opposite the first direction, a rearward movement of the passenger conveyance device is achieved.

Furthermore it is proposed that the amount of powering of the drive device and/or the speed of the passenger conveyance device is depending on the amount of deflection of the handle out of the idle rotational position and/or depending on the amount of rotation of at least one potentiometer being in operative, especially mechanical, connection with the handle, wherein preferably the amount of powering of the drive device and/or the speed of the passenger conveyance device is commensurate, especially linear, exponential, preferably exponentially increasing with increasing amount of deflection and/or proportional, to the amount of deflection and/or rotation.

It is especially preferred that the handle comprises one, especially single, first lever, wherein preferably the first lever is gripped by a left hand or a right hand of a user and/or a forward and rearward movement of the device is determined by at least one movement selector switch and/or the handle comprises at least one first lever and at least one second lever, wherein preferably the first lever is gripped by a left hand and the second lever is gripped by a right hand of a user of the passenger conveyance device while operating, especially driving, the passenger conveyance device and/or the first axis is located between the first lever and the second lever.

In the before mentioned embodiment it is preferred that the movement of the handle in a direction perpendicular to the first axis may be causable by a movement, especially pulling and/or pushing of the handle, preferably by moving the first lever and the second lever in one and the same direction and/or further moving and/or pushing the handle after at least a part of the handle has come into contact with at least one stop, especially by further moving, pulling and/or pushing the first lever or second lever, especially after the other of the first lever and the second lever has come into contact with at least one stop.

The invention further proposes that a movement of the handle in a direction perpendicular to the first axis and/or a rotation of the handle beyond the power position causes a cut off of the power supply of the drive device, causes the actuation of a brake and/or causes an idling of the drive device.

A Passenger conveyance device may be characterized in that the first axis is fixed relative a supporting structure of the passenger conveyance device, a supporting structure of a steering device, a supporting structure of the control device and/or a steering handle of the passenger conveyance device.

For the before mentioned embodiment it is proposed that in a normal use position a rotational axis of the handle is in coincidence with the first axis, wherein especially the handle is movable in a direction perpendicular to the first axis and/or the rotational axis, preferably out of the normal use position, into an emergency position in which the rotational axis is spaced from the first axis.

A passenger conveyance device may furthermore be characterized in that the slowing down and/or the prohibition of an acceleration of the passenger conveyance device is initiated when the distance between the first axis and the rotational axis and/or the rotation of the handle beyond the power position exceeds a first threshold, wherein especially the slowing down and/or the prohibition of an acceleration is initiated by actuating a switch device, especially by a mechanic contact of the handle and/or an element being mechanically connected to the handle with the switch device and/or by a non contact sensing, preferably magnetic and/or optical sensing, of the position of the handle by the switch device and/or by detecting that the potentiometer operatively connected to the handle is rotated beyond a position being corresponding to the power position of the handle.

Furthermore the invention proposes that the handle is forced, especially out of the emergency position into the normal use position and/or idle position, and/or out of a position beyond the power position into the power position and/or idle position, preferably by at least one spring device.

Finally the passenger conveyance device according to the invention may be characterized in that the handle is guided in a direction perpendicular to the first axis and/or the rotational axis such that the rotational axis is moved in a direction to the user or in a direction away from the user.

The object with regard to the method is achieved by a method of controlling the speed and/or acceleration of a passenger conveyance device, especially of a powered mobility scooter and/or a passenger conveyance device according to the invention, wherein the speed is altered by a rotational movement of a handle around a first axis, wherein a linear movement of the handle in a direction mainly perpendicular to the first axis a slowing down and/or a prohibition of an acceleration of the passenger conveyance device is initiated and/or by rotating the handle from an idle position around the first axis into at least one power position a maximum speed and/or acceleration of the passenger conveyance device is achieved, wherein by a rotation of the handle around the first axis in a direction from the idle position to the power position and beyond the power position a slowing down and/or a prohibition of an acceleration of the passenger conveyance device is initiated.

The invention proposes for the method that by a rotation of the handle out of an idle position into a first direction around the first axis, especially in the direction of the power position, a forward movement of the passenger conveyance device is achieved, whereas by a rotation of the handle out of the idle position into a second direction, being opposite the first direction, a rearward movement of the passenger conveyance device is achieved.

Finally it is especially preferred that by a movement of the handle in a direction perpendicular to the first axis a cut off of a power supply of the drive device, the actuation of a brake and/or an idling of the drive device is caused, especially by means of an control device of the passenger conveyance device and/or by opening or closing at least one switch.

The object with regard to the control device is achieved by a control device to control the speed and/or acceleration of a passenger conveyance device, especially of a passenger conveyance device according to the invention and/or usable in a method according to the invention, comprising at least one handle being rotatable around a first axis to change a speed and/or acceleration of the passenger conveyance device , wherein the handle is movable in a direction mainly perpendicular to the first axis and/or is movable beyond a power position.

An advantageous control device may be characterized by at least one first sensing device to sense a rotational position of the handle around the first axis and at least one second sensing device to sense a relative displacement of the handle, especially of a rotational axis of the handle, with respect to the first axis, preferably in a direction perpendicular to the first axis, wherein especially the first sensing device and/or the second sensing device comprises at least one potentiometer, at least one switch, preferably at least one mechanical, electrical and/or optical switch, at least one digital and/or at least one analogue sensor.

For the before mentioned embodiments it is preferred that the handle comprises one first, especially single, lever and/or the handle comprises at least one first lever and at least one second lever, wherein preferably the first axis being located between the first lever and the second lever and/or the movement of the handle in a direction perpendicular to the first axis may be causable by a movement, especially pulling and/or pushing the handle, preferably by moving the first lever and the second lever in one and the same direction, or moving one side of the handle the first lever and/or one of the first lever or second lever against a stop.

Furthermore the invention proposes that in a normal use position a rotational axis of the handle is in coincidence with the first axis, wherein the handle is movable, especially in a direction perpendicular to the first axis and/or the rotational axis out of the normal use position into an emergency position in which the rotational axis is spaced from the first axis.

Further an inventive control device may be characterized by at least one spring device forcing the handle, especially out of the emergency position and/or out of a position beyond the power position, into the normal use position, the power position and/or the idle position.

Finally it is proposed that a control device according to the invention may be characterized by at least one guiding element, especially comprised by a supporting structure of the control device, wherein the handle is guided by the guiding element, preferably in a direction perpendicular to the first axis and/or the rotational axis and/or such that the rotational axis is moved in a direction to the user or in a direction away from the user.

Thus the invention is based on the astonishing perception that in a first configuration by allowing and sensing a movement of a handle of a control device, especially of a wig-wag, in a direction mainly perpendicular to a first axis around which the handle is rotated to control the speed and the direction of travel, allows to recognize a panic reaction of a user and thus to bring the mobility scooter into a safe driving condition, especially that the mobility scooter is slowed down and/or a (further) acceleration of the mobility scooter is avoided. Especially the passenger conveyance device and the control device respectively react to the wig-wag lever been pulled on both sides or that the lever, especially a single lever of the control device is pulled further after coming into contact with a mechanical stop such that a power is cut off or such that a brake is actuated. In a second configuration that might be realized in combination with the first configuration or alternatively to the first configuration the idea is used that a panic reaction of a user might also be detected in that the handle has moved beyond a power position in which a user selects the maximum speed and/or maximum acceleration of the passenger conveyance device. Thus a user usually moves the handle from the idle position to the power position to reach a maximum acceleration or speed. In case of an emergency the user might not move the handle from the power position into the direction of the idle position but might further pull the handle beyond the power position, away from the idle position.

In these ways in case the mobility scooter is moving, especially due to a rotation of the handle out of the idle position around the first axis, a slowing down and stopping of the mobility scooter is achieved in a panic situation. However, also in a situation in which the mobility scooter is staying and a user want to avoid that the scooter moves, as for example a sudden obstacle is occurring in front of the mobility scooter in case the user would grab the wig-wag, especially both levers of the wig-wag the mobility scooter would not accelerated but would stay still and especially a brake would be actuated.

Anyhow, by the control device according to the invention a normal operation of the mobility scooter by turning the handle around the first axis, especially by pulling the single lever, the left hand lever or the right hand lever, the scooter can be driven forwards and backwards in the usual way. Especially, the inventive control device allows that the amount of powering of the drive device is still depending on the amount of deflection of the handle out of the idle rotational position, especially an amount of rotation around the first axis. To sense the amount of deflection it is preferred that a first sensing device like a electric potentiometer is used.

It is furthermore preferred that the first axis is fixed to a supporting structure to which the handle is movable connected. The rotational axis of the handle is in the normal use position coincident with the first axis. In case the handle is moved in a direction perpendicular to the first axis and/or the rotational axis the speed is decreased or a restriction of the acceleration of the mobility scooter is achieved in the first configuration. The potentiometer might especially be used to detect a movement of the handle beyond the power position in the second configuration. For example, the handle or wig-wag rotates a potentiometer and a change the electrical resistance is what is used by a controller to control the passenger conveyance device speed or acceleration. The controller might be programmed such that a maximum speed/acceleration is achieve after the handle and thus the potentiometer is rotated by an angle α out of the idle position. For example, an angle α of 23° is usually used to define the power position. By a respective programming of the controller a rotation of the handle and the potentiometer beyond the angle α is detected. Thus when the angle α is exceeded, especially by pulling back the handle hard, like in a panic situation, the potentiometer rotates further to an angle β, for example 25° in which the handle might contact a stop and the controller detects this movement and decelerates or stops the passenger conveyance device. It is especially preferred that the rotational axis of the handle is guided along a guiding member, especially in a direction to and away from a user, especially in a longitudinal direction of a steering column or steering device to which the control device is at least indirectly connected. It might also possible for the handle/lever of the control device, especially wig-wag, to move in any direction of the horizontal plane perpendicular to the first axis, especially in a rotational manner and the position/distance of the rotational axis of the handle relative to the first axis is sensed.

It is especially preferred that the handle is forced via a spring device into the direction of the normal use position.

Anyhow by a second sensing device, for example a mechanical switch, it is detected when the handle is brought into an emergency position, especially after a movement of the handle in a direction perpendicular to the first axis. For example the handle may come into contact with this switch, such that a powering of the drive device is cut off.

Thus in a first preferred embodiment the control device comprises a wig-wag assembly consisting of a wig-wag handle/lever and a speed controlling device connected to the lever, normally an electric potentiometer. In the second preferred embodiment the control device comprises a single lever. The control device is for example connected to a steering column that is representing a fixed assembly. The wig-wag mounting, the mounting of the single lever or the steering of the handle is free to move axially, especially towards and away from the user, with respect to the first axis. The mounting of the lever/handle might have a spring or elastic member that holds the wig-wag handle or the single lever in the normal use position relative to the fixed assembly. A combination of an axial sliding movement, i.e. means a movement in a direction perpendicular to the first axis, and the spring elastic elements allows the handle or lever to rotate as it would normally if the mount of the handle would be fixed relative to the supporting structure.

However, especially in case the left hand and right hand lever are pulled simultaneously or in case the single lever is moved in contact with a stop and further the mount of the handle/lever allows, especially due to a leverage effect, an axial movement against the spring force and therefore the handle/lever of the control device, especially wig-wag, maybe pulled towards the user and away from the fixed assembly/supporting structure like a steering column. Thus the user may bring the lever/handle into an emergency position. This emergency/panic position is detected, for example by a switch device that may be mounted to either the handle/lever assembly or the fixed assembly, that means the mounting or supporting structure. For example in the normal use position the switch is closed (or open depending on the logic used) by an mechanic contact, proximity activation or magnetic activation by virtue of the single lever or wig-wag assembly, especially the handle/lever. In case the handle/lever is moved relative to the fixed assembly, especially in a direction perpendicular to the first axis, the switch is opened/or closed, depending on the logic used. Thus an emergency position of the lever/handle is detected and this detection is used to change the status of the drive device, for example either reduce the speed, remove power to the drive device and/or apply a brake.

Further features and advantages of the claimed subject-matter become apparent from the following description of preferred embodiments explained in the following specification with a help of respective figures in which
- Figure 1: shows a schematic side view onto a passenger conveyance device according to a first embodiment of the invention;
- Figure 2: shows a perspective view onto a control device according to the invention;
- Figure 3: shows a view onto the control device of Figure 2 similar to Figure 3 in the direction of A in Figure 2, wherein in the control device is in a normal use position; and
- Figure 4: shows a view onto the control device of Figure 2 in an emergency position.

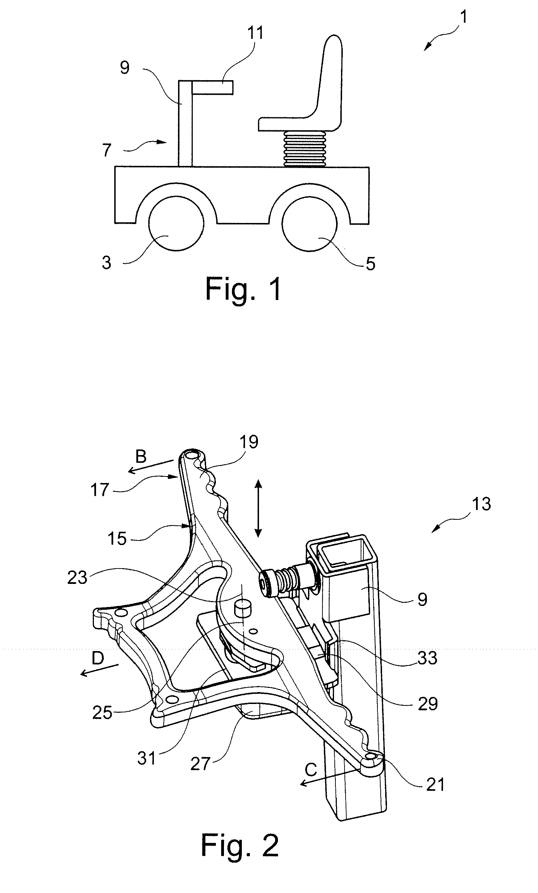

In figure 1 a schematic side view onto a passenger conveyance device in form of a powered mobility scooter 1 is shown. The mobility scooter 1 comprises wheels 3, 5, wherein the back wheels 5 represent drive wheels that are powered by a not shown drive device in form of an electro motor. The mobility scooter 1 furthermore comprises a steering device 7. The steering device 7 comprises a steering column 9 that connects a steering handle 11 with the wheels 3 to steer the powered mobility scooter 1. In the area of the steering handle 11 a control device allowing a user of the mobility scooter 1 to control the speed and the direction of travel of the mobility scooter is located.

A control device 13 according to the invention, especially in line with the first configuration, and used in the mobility scooter 1 is shown in figure 2. The control device 13 comprises a handling device in form of a wig-wag 15. The wig-wag 15 comprises a handle 17 representing a first left hand lever 19 and a second right hand lever 21. The handle 17 and thus the levers 19, 21 are rotatable around a rotational axis 23. The rotational axis 23 is fixed relative to the handle 17.

The control device 13 is shown in figure 2 in a normal use position. In this position the rotational axis 23 is coincident with a first axis 25 of the control device 13. The first axis 25 is fixed relative to a supporting structure 27 of the control device 13. The supporting structure 27 itself is fixed relative to the steering column 9. On the supporting structure 27 furthermore a switch 29 representing a second sensing device is located.

In figure 2 the control device 13 is shown in a normal use position wherein the rotational axis 23 and the first axis 25 are coincident as well as in an idle position of the handle 17. The handle 17 is connected to a potentiometer 31 (representing a first sensing device), which in turn is connected to the drive device in form of the electric motor. In case the handle 17 is rotated about the rotational axis 23/the first axis 25 the power to the electric motor is controlled such that with increasing deflection of the handle 19 the power supplied to the drive device is increased and thus the speed of the mobility scooter 1 is also increased. Thus in case the lever 19 is moved by user in a direction B to the left in figure 2 a forward travelling of the mobility scooter 1 is reached. In case the handle 17 is turned in the opposite direction C, that means that lever 21 is pulled by user in a direction D to the left in figure 2 a rearward travelling of the mobility scooter 1 is reached.

In case a user is travelling with the mobility scooter 1 and, especially is holding the lever 19 or has brought the lever 19 in a position in which it remains automatically such that the mobility scooter 1 is travelling in the forward direction, a user might grip the lever 19 or pull the lever 19 stronger in case an obstacle is suddenly occurring in the path of travelling. Thus in the invention the speed of the mobility scooter 1 would be increased.

As usually a user also gripes in such a panic or emergency situation the other lever 21 and also pulls it, according to the invention the handle 15 is moved in a direction D perpendicular to the first axis 25. Such a movement of the rotational axis 23 and the handle 17 with respect to the first axis 25 in the direction D opens the switch 29 and the power supplied to the drive device is cut off. In such a way the mobility scooter 1 is slowed down. Preferably with opening the switch 29 furthermore a brake is actuated and thus the travelling of the mobility scooter 1 is stopped.

To avoid a movement of the handle 17 in a direction perpendicular to the first axis 25 when the user pulls the levers 19,21 during a normal use situation, the handle 17 is spring biased into the direction of the switch 29 such that a rotation of the handle 17 will not lead to space between the rotational axis 23 and the first axis 25.

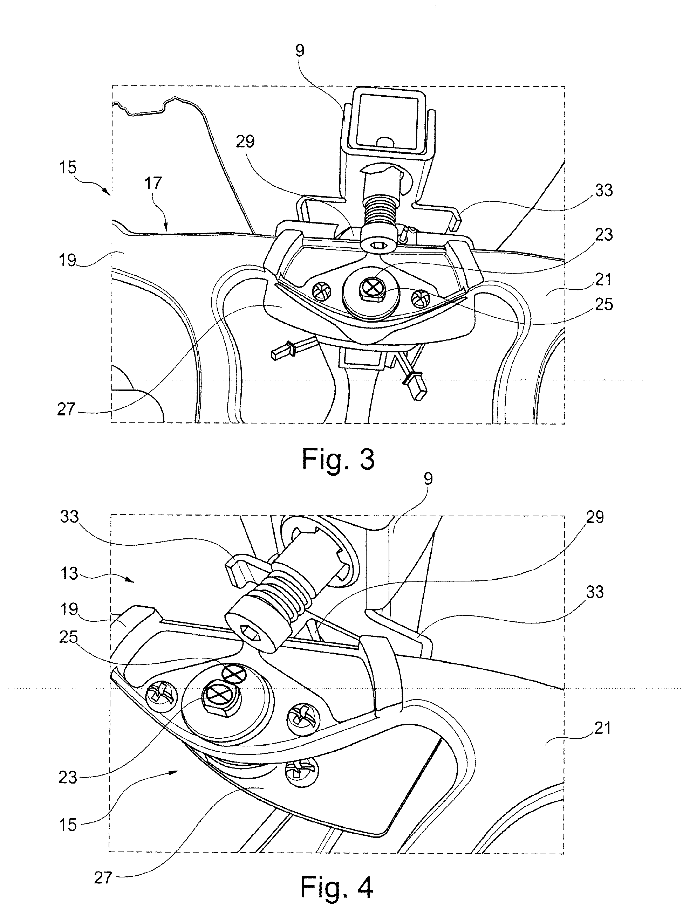

In figures 3 and 4 a perspective view onto the control device 13 in a direction A in figure 2 is shown. In figure 3 the control device is shown in an idle rotational position as well as in a normal use position. In figure 4 the control device is shown in a panic position, that means that the lever 19 is pulled by a user such that the handle 17 is rotated around the first axis 25 as well as the rotational axis 23 out of the idle position. Anyhow, furthermore the user has pulled the lever 19 such that the lever 21 has come into contact with a stop 33. Due to a panic situation the user has further pulled the lever 19. By the leverage formed by the handle 17 and the stop 33 the handle is moved in the direction D. This movement might be supported by the user also pulling the lever 21 but is not necessary for it. By moving the handle 17 and thus the rotational axis 23 into direction D to the user, i.e. in a direction perpendicular to the first axis 25, there is a space between the first axis 25 and the rotational axis 23. The switch 29 is opened and the power supply to the drive device has been cut off.

In a not shown, second preferred embodiment, the control device comprises a single lever. This lever is used to control the speed and acceleration of the mobility scooter, wherein especially the direction of travel is selected by a movement selector switch. In this embodiment the lever is also rotatable around a rotational axis that is, in a normal use position, coincident with a first axis. However, in case a user moves the single lever in an emergency situation into contact with a stop and then further, due to a leverage effect, the rotational axis will be moved in a direction perpendicular to the first axis. Similar to the above described control device 13 a space between the first axis and the rotational axis maybe sensed such that a switch is opened and the power supply to the drive device is cut off.

In the control device 13 the second configuration of the claimed invention might be realized in addition to the before described first configuration or instead of the before described first configuration.

To change the speed/acceleration of the mobility scooter a user of the scooter 1 moves the handle 17 out of the idle position into the direction of the power position. Depending on the amount of rotation of the handle 17 around the axis 25 the speed/acceleration is changed until a power position is reached in which the speed/acceleration of the scooter 1 has reached its maximum. Especially by analyzing the output data of a potentiometer connected to the handle 17 the power position is detected and furthermore it is detected when the handle 17 is moved beyond the power position. With beyond the power position it is meant that the handle is rotated around the axis 25 in a direction from the idle position to the power position but further beyond the power position. Such a movement is for example made by a user in a panic situation. When detecting this movement of the handle 17 the scooter 1 is also stopped, especially by depowering a drive device or by actuating a break. To avoid an unwanted movement of the handle beyond the power position the handle might be biased in an opposite direction into the power position such that a user has to build up a reasonable higher force to move the handle beyond the power position.

The features disclosed and shown in the figures, the specification and the claims might be essential when taken alone or taken in any combination for the claimed invention in the respective embodiments.

### Reference sign list

- 1: mobility scooter
- 3: wheel
- 5: wheel
- 7: steering device
- 9: steering column
- 11: steering handle
- 13: control device
- 15: wig-wag
- 17: handle
- 19: lever
- 21: lever
- 23: rotational axis
- 25: first axis
- 27: supporting structure
- 29: switch
- 31: potentiometer
- 33: stop

- A: direction
- B, C, D: direction

## Claims

1. Passenger conveyance device (1), especially powered mobility scooter, comprising at least one drive device to power at least one drive wheel (5) of the passenger conveyance device (1) and at least one control device (13) to control the speed of the drive device, wherein the control device (13) comprises at least one handle (17) being rotatable around a first axis (25), in an idle rotational position of the handle (17) the drive device is idled and rotating the handle (17) around the first axis (25) out of the idle rotational position causes a powering of the drive device, **characterized in that**
a movement of the handle (17) in a direction mainly perpendicular to the first axis (25) leads to a slowing down and/or a prohibition of an acceleration of the passenger conveyance device (1) and/or
a rotation of the handle (17) around the first axis (25) into at least one power position leads to a maximum powering of the drive device, wherein a rotation of the handle (17) around the first axis (25) into a direction from the idle position to the power position and beyond the power position leads to a slowing down and/or prohibition of an acceleration of the passenger conveyance device.

2. Passenger conveyance device according to claim 1, **characterized in that** the drive device comprises an electric motor and/or a combustion engine.

3. Passenger conveyance device according to claim 1 or 2, **characterized in that** by a rotation of the handle (17) out of the idle rotational position into a first direction around the first axis (25) a forward movement of the passenger conveyance device (1) is achieved, whereas by a rotation of the handle out of the idle rotational position into a second direction, being opposite the first direction, a rearward movement of the passenger conveyance device (1) is achieved, and/or **characterized in that** the amount of powering of the drive device and/or the speed of the passenger conveyance device (1) is depending on the amount of deflection of the handle (17) out of the idle rotational position and/or depending on the amount of rotation of at least one potentiometer being in operative, especially mechanical, connection with the handle, wherein preferably the amount of powering of the drive device and/or the speed of the passenger conveyance device (1) is commensurate, especially linear, exponential, preferably exponentially increasing with increasing amount of deflection and/or proportional, to the amount of deflection and/or rotation.

4. Passenger conveyance device according to one of the preceding claims, **characterized in that**
the handle comprises one, especially single, first lever, wherein preferably the first lever is gripped by a left hand or a right hand of a user and/or a forward and rearward movement of the device is determined by at least one movement selector switch and/or the handle (17) comprises at least one first lever (19) and at least one second lever (21), wherein preferably the first lever (19) is gripped by a left hand and the second lever (21) is gripped by a right hand of a user of the passenger conveyance device (1) while operating, especially driving, the passenger conveyance device (1) and/or the first axis (25) is located between the first lever (19) and the second lever (21), wherein especially the movement of the handle (17) in a direction perpendicular to the first axis (25) may be causable by a movement, especially pulling and/or pushing of the handle (17), preferably by moving the first lever (19) and the second lever (21) in one and the same direction and/or further moving and/or pushing the handle (17) after at least a part of the handle (17) has come into contact with at least one stop (33), especially by further moving, pulling and/or pushing the first lever (19) or the second lever (21), especially after the other of the first lever (19) and second lever (21) has come into contact with at least one stop (33).

5. Passenger conveyance device according to one of the preceding claims, **characterized in that**
a movement of the handle (17) in a direction perpendicular to the first axis (25) and/or a rotation of the handle (17) beyond the power position causes a cut off of the power supply of the drive device, causes the actuation of a brake and/or causes an idling of the drive device.

6. Passenger conveyance device according to one of the preceding claims, **characterized in that**
the first axis (25) is fixed relative a supporting structure of the passenger conveyance device, a supporting structure (9) of a steering device (7), a supporting structure (27) of the control device (13) and/or a steering handle (11) of the passenger conveyance device, wherein preferably
in a normal use position a rotational axis (23) of the handle (17) is in coincidence with the first axis (25), wherein especially the handle (17) is movable in a direction perpendicular to the first axis (25) and/or the rotational axis (23), preferably out of the normal use position, into an emergency position in which the rotational axis (23) is spaced from the first axis (25), wherein especially
the slowing down and/or the prohibition of an acceleration of the passenger conveyance device (1) is initiated when the distance between the first axis (25) and the rotational axis (23) and/or the rotation of the handle (17) beyond the power position exceeds a first threshold, wherein especially the slowing down and/or the prohibition of an acceleration is initiated by actuating a switch device (29), especially by a mechanic contact of the handle (17) and/or an element being mechanically connected to the handle (17) with the switch device (29) and/or by a non contact sensing, preferably magnetic and/or optical sensing, of the position of the handle (17) by the switch device (29) and/or
by detecting that the potentiometer operatively connected to the handle (17) is rotated beyond a position being corresponding to the power position of the handle (17).

7. Passenger conveyance device according to claim 6, **characterized in that** the handle (17) is forced, especially out of the emergency position, into the normal use position and/or idle position, and/or out of a position beyond the power position into the power position and/or idle position, preferably by at least one spring device.

8. Passenger conveyance device according to one of the preceding claims, **characterized in that**
the handle (17) is guided in a direction perpendicular to the first axis (25) and/or the rotational axis (23) such that the rotational axis (23) is moved in a direction to the user or in a direction away from the user.

9. Method of controlling the speed and/or acceleration of a passenger conveyance device (1), especially of a powered mobility scooter and/or a passenger conveyance device (1) according to one of the preceding claims, wherein the speed is altered by a rotational movement of a handle (17) around a first axis (25), **characterized in that** by a linear movement of the handle (17) in a direction mainly perpendicular to the first axis (25) a slowing down and/or a prohibition of an acceleration of the passenger conveyance device (1) is initiated and/or by rotating the handle (17) from an idle position around the first axis (25) into at least one power position a maximum speed and/or acceleration of the passenger conveyance device (1) is achieved, wherein by a rotation of the handle (17) around the first axis (25) in a direction from the idle position to the power position and beyond the power position a slowing down and/or a prohibition of an acceleration of the passenger conveyance device (1) is initiated.

10. Method according to claim 9, **characterized in that**
by a rotation of the handle (17) out of an idle position into a first direction around the first axis (25), especially in the direction of the power position, a forward movement of the passenger conveyance device (1) is achieved, whereas by a rotation of the handle (17) out of the idle position into a second direction, being opposite the first direction, a rearward movement of the passenger conveyance device is achieved, and/or **characterized in that** by a movement of the handle (17) in a direction perpendicular to the first axis (25) a cut off of a power supply of the drive device, the actuation of a brake and/or an idling of the drive device is caused, especially by means of an control device (13) of the passenger conveyance device (1) and/or by opening or closing at least one switch (29).

11. Control device (13) to control the speed and/or acceleration of a passenger conveyance device (1), especially of a passenger conveyance device (1) according to one of the claims 1 to 8 and/or usable in a method according to one of the claims 9 to 10, comprising at least one handle (17) being rotatable around a first axis (25) to change a speed and/or acceleration of the passenger conveyance device (1), **characterized in that** the handle (17) is movable in a direction mainly perpendicular to the first axis (25) and/or is movable beyond a power position.

12. Control device (13) according to claim 11, **characterized by** at least one first sensing device to sense a rotational position of the handle (17) around the first axis (25) and at least one second sensing device (29) to sense a relative displacement of the handle (17), especially of a rotational axis (23) of the handle (17), with respect to the first axis (25), preferably in a direction perpendicular to the first axis (25), wherein especially the first sensing device and/or the second sensing device (29) comprises at least one potentiometer, at least one switch (29), preferably at least one mechanical, electrical and/or optical switch, at least one digital and/or at least one analogue sensor.

13. Control device (13) according to claim 11 or 12, **characterized in that** the handle comprises one first, especially single, lever and/or
the handle (17) comprises at least one first lever (19) and at least one second lever (21), wherein preferably the first axis (25) being located between the first lever (19) and the second lever (21) and/or the movement of the handle (17) in a direction perpendicular to the first axis (25) may be causable by a movement, especially pulling and/or pushing, of the handle (17), preferably by moving the first lever (19) and the second lever (21) in one and the same direction, or moving one side of the handle (17), the first lever and/or one of the first lever (19) or second lever (21), against a stop (33).

14. Control device according to claim 13, **characterized in that** in a normal use position a rotational axis (23) of the handle (17) is in coincidence with the first axis (25), wherein the handle (17) is movable, especially in a direction perpendicular to the first axis (25) and/or the rotational axis (23), out of the normal use position into an emergency position in which the rotational axis (23) is spaced from the first axis (25).

15. Control device (13) according to one of the claims 11 to 14, **characterized by** at least one spring device forcing the handle (17), especially out of the emergency position and/or out of a position beyond the power position, into the normal use position, the power position and/or the idle position, and/or **characterized by** at least one guiding element, especially comprised by a supporting structure (27) of the control device (13), wherein the handle (17) is guided by the guiding element, preferably in a direction perpendicular to the first axis (25) and/or the rotational axis (23) and/or such that the rotational axis (23) is moved in a direction to the user or in a direction away from the user.
